# EUROPEAN PATENT APPLICATION

(11) **EP 2 031 781 A1**
(43) Date of publication of application: **04.03.2009**
(21) Application number: 07743175.7
(22) Date of filing: 11.05.2007
(51) Int. Cl.: H04H 1/00, H04B 1/16, H04N 5/445, H04N 7/173

(54) **TRANSMITTER AND RECEIVER FOR DIGITAL BROADCASTING**

(30) Priority: 19.06.2006 JP 2006168642
(71) Applicant: Panasonic Corporation, Kadoma-shi Osaka 571-8501 (JP)
(72) Inventor: OKAMURA, Shinichiro, c/o Matsushita El. Ind. Co., Ltd., IPROC, Chuo-ku, Osaka-shi, Osaka 540-6207 (JP); IBARAKI, Susumu, c/o Matsushita El. Ind. Co., Ltd., IPROC, Chuo-ku, Osaka-shi, Osaka 540-6207 (JP); KATOU, Hisaya, c/o Matsushita El. Ind. Co., Ltd., IPROC, Chuo-ku, Osaka-shi, Osaka 540-6207 (JP)
(74) Representative: Pautex Schneider, Nicole Véronique
(86) International application number: PCT/JP2007/059740
(87) International publication number: WO 2007/148483

(57) **Abstract**

In order to alleviate stresses on a user, a transmitter comprises a channel coding section operable to encode input data stream according to a first modulation scheme, an additional information encode section operable to receive character data and additional information having a reserve area and including a transmission parameter relative to the first modulation scheme, to store the received character data in the reserve area of the additional information, and to encode the additional information in which the character data is stored according to a second modulation scheme with a smaller number of bits, which can be represented with a single symbol, than that of bits of a symbol to be used in the first modulation scheme; a multi-carrier modulation section operable to modulate multi-carriers with the data stream encoded according to the first modulation scheme and the additional information encoded according to the second modulation scheme.

## Description

### Technical Field of the Invention

The present invention relates to a transmitter and a receiver for digital broadcasting.

### Background of the Invention

In recent years, there has been a rapid spread of digital broadcasting providing digitalized television program data and receivers for the digital broadcasting. Among the digital broadcasting, hi-definition broadcasting and terrestrial digital broadcasting have been started in Japan. The hi-definition broadcasting is mainly provided for stationary receivers, while so-called one segment broadcasting is mainly provided for mobile receiving terminals such as cellular phones and in-vehicle navigation systems. In the digital broadcasting, data is transmitted with orthogonal frequency division multiplexing (OFDM), which is a multi-carrier transmission scheme with good noise immunity to multipath noise, for example. The OFDM scheme uses a guard interval, which is a signal transmitted periodically, between adjacent OFDM symbols in order to reduce noise or inter-symbol interference. The time required to represent a symbol transmitted by a multi-carrier transmission scheme is longer than that of the symbol transmitted by a transmission scheme using a single carrier wave. The guard interval serves to suppress the interference caused by multipath, resulting in a reduction in the degradation of the transmission quality. A number of bits required to represent a symbol in one-segment broadcasting is smaller than that in the high-definition broadcasting, in order to improve noise immunity. The one-segment broadcasting for mobile receiving terminals is capable of providing character services to users if the terminal cannot output a sound (refer to, for example, Non-Patent Document 1).

Non-Patent Document 1: [Terrestrial digital broadcasting transmission system ARID TR-B14 Version 2.6] (established on January 24th, 2002, and revised on November 30th, 2005, Association of Radio Industries and Businesses)

### Disclosure of the Invention

### Problems to be Resolved by the Invention

If the receiving terminal receives a signal of the one-segment broadcasting during its movement, the receiving terminal may stop outputting a video and/or a sound under a bad receiving environment, regardless of the one-segment broadcasting having noise immunity higher than that of the high-definition broadcasting. If the receiving terminal stops outputting such data for a long time or intermittently stops outputting such data a plurality of times, the stop of the output may cause the user's frustration.

It is, therefore, an object of the present invention to provide a transmitter and a receiver for digital broadcasting, with reduced frustration for the user.

### Means for Solving the Problems

A transmitter according to one aspect of the present invention comprises a channel coding section operable to encode input data stream according to a first modulation scheme, an additional information encode section operable to receive character data and additional information having a reserve area and including a transmission parameter relative to the first modulation scheme, to store the received character data in the reserve area of the additional information, and to encode the additional information in which the character data is stored according to a second modulation scheme using a smaller number of bits which can be represented with a single symbol than that of bits of a symbol to be used in the first modulation scheme, a multi-carrier modulation section operable to modulate multi-carriers with the data stream encoded according to the first modulation scheme and the additional information encoded according to the second modulation scheme

A receiver according to another aspect of the present invention comprises an antenna section operable to receive the transmission signals which is multi-carriers modulated with a data stream and additional information, the data stream being encoded according to a first modulation scheme, and the additional information being encoded according to a second modulation scheme using a smaller number of bits, which can be represented with a single symbol, than that of bits of a single symbol to be used in the first modulation scheme, a character information decoding section operable to the character data stored in the additional information included in the transmission signals received by the antenna section, and an image output section operable to output a character represented by the character data decoded in the character information decoding section.

The transmitter inserts character data into the reserve area of additional information encoded using the second modulation scheme with a smaller number of bits, which can be represented with a single symbol, than that of bits of a symbol to be used in the first modulation scheme and then transmits the inserted character data. In the multi-carrier transmission, the less the number of bits which can be represented with a single symbol allows the higher noise resistance during data transmission. Consequently, the receiver reproduces and outputs character data even under the bad receiving environment. The transmitter and receiver can therefore be achieved with reduced frustration for the user.

### Brief Description of the Drawings

Fig. 1 is a block diagram showing the entire configuration of a transmitter according to the first embodiment of the present invention.
Fig. 2 is a block diagram showing the entire configuration of a receiver according to the first embodiment of the present invention.
Fig. 3 is a diagram showing an outline of segments to be used in Japanese terrestrial digital broadcasting.
Fig. 4 is a block diagram showing the entire configuration of a transmitter according to the second embodiment of the present invention.
Fig. 5 is a table listing bit assignments to Transmission and Multiplexing Configuration Control (TMCC) information to be used in Japanese terrestrial digital broadcasting.
Fig. 6 is a block diagram showing the entire configuration of a receiver according to the second embodiment of the present invention.

### Description of Reference Numerals

**100:** Encode section
**101:** Multiplex section
**102, 300:** Channel coding section
**103:** Additional information encode section
**104:** Multi-carrier modulation section
**200, 411:** Antenna
**201, 412:** Tuner
**202, 413:** Demodulator
**203, 420:** Decode section
**204:** Character information decode section
**205, 430:** Audio output device
**206, 440:** Video output device
**301:** TMCC information encode section
**302:** OFDM segment frame generation section
**303:** IFFT section
**304:** Guard interval addition section
**305:** Frequency conversion section
**421:** Transport stream (TS) demultiplex section
**422:** Audio decode section
**423:** Video decode section
**424:** Character decode section
**425:** Audio data management section
**426:** Video data management section
**427:** Decode control section

### Best Mode for Carrying Out the Invention

A transmitter and a receiver according to embodiments of the present invention will be described with reference to the accompanying drawings.

### (First Embodiment)

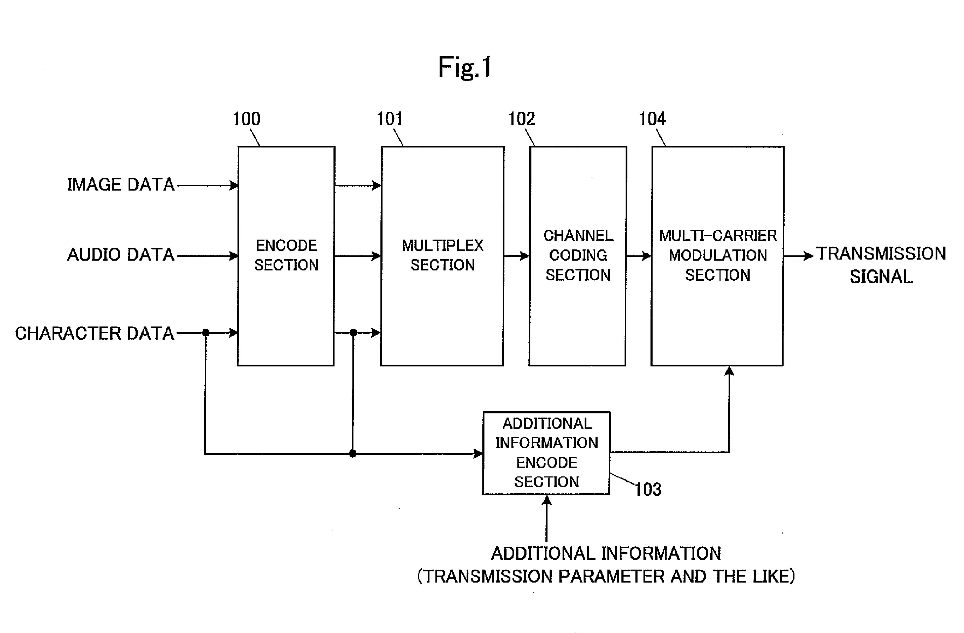

Fig. **1** is a block diagram showing the entire configuration of the transmitter according to the first embodiment of the present invention. In Fig.l, the transmitter comprises an encode section **100,** a multiplex section **101,** a channel coding section **102,** an additional information encode section **103,** and a multi-carrier modulation section **104.**

To the encode section **100,** at least image data, audio data, and character data are inputted. A combination of the image data and the audio data exemplarily represents a program digitally broadcast. The character data is used for, for example, a subtitle service for the one-segment broadcasting described above. The encode section **100** encodes the inputted image data, audio data, and character data to generate an image data stream, an audio data stream, and a character data stream, respectively.

The multiplex section **101** receives at least the image data stream, the audio data stream, and the character data stream from the encode section **100** to multiplex the three types of data streams into a single data stream.

The channel coding section **102** receives the multiplexed data stream from the multiplexing **101,** performs channel coding including carrier modulation and error correction processing to the received data stream, and then transmits the encoded data stream to multi-carrier modulation section **104.**

In the present embodiment, the data stream is broadcast according to a multi-carrier transmission scheme such as OFDM. If the receiver receives such a broadcast wave during movement thereof, the receiver may be affected by a variation in an electric field and a Doppler shift or an effect on the multipath changing with the elapse of time. This leads to a variation in a bit error rate (BER) caused by a signal-to-noise ratio of a received signal level. The worse receiving environment of the receiver is, the higher the BER becomes. In this case, the receiver cannot correctly receive the data stream. In order to reduce an effect obtained by a change in the receiving environment, the carrier modulation scheme of the multi-carrier transmission may be dynamically changed to another one. Typical carrier modulation schemes includes binary phase shift keying (BPSK), differential binary phase shift keying (DBPSK), quadrature phase shift keying (QPSK), differential quadrature phase shift keying (DQPSK), 16 quadrature amplitude modulation (16 QAM) and 64 quadrature amplitude modulation (64 QAM). In each of those modulation schemes, the combination of a phase and amplitude of a signal is determined, and a bit string corresponding to the combination is determined. In BPSK, the amount of information represented by a single symbol is one bit since binary values, zero and one, are used. In QPSK, the amount of information represented by a single symbol is two bits since four values are used. In 16 QAM, four bits can be represented. In 64 QAM, six bits can be represented.

Each of the carrier modulation schemes has a trade-off relationship between the maximum amount of information represented with a single symbol and noise immunity. For this reason, the transmitter switches a carrier modulation scheme to another one in which a single symbol represents a large amount of information if the receiving environment of the receiver is good, and to another one in which a single symbol represents a small amount of information if the receiving environment is not good, thereby realizing dynamic data transmission.

There is another data transmission technique, in which multi-carriers to be used in a multi-carrier transmission scheme are divided into each of predetermined bandwidths, and a different carrier modulation scheme is applied to each of the bandwidths.

Hereinafter, the carrier modulation scheme used in the channel coding section **102** is referred to as a first carrier modulation scheme. The first carrier modulation scheme is typified by QPSK, DQPSK, 16 QAM, or 64 QAM. The channel coding section **102** modulates the inputted data stream with a predetermined carrier modulation scheme among QPSK, DQPSK, 16 QAM, and 64 QAM.

The character data is inputted not only to the encode section **100,** but also to the additional information encode section **103.** To the additional information encode section **103,** inputted are additional information including transmission parameters. One of the transmission parameters specifies a carrier modulation, and another one of the transmission parameters specifies error correction. The carrier modulation and the error correction are carried out by the channel coding section **102** executes the carrier modulation scheme and the error correction processing on the basis of the transmission parameters. The additional information is formed in a predetermined data format, and the transmission parameters and the like are stored in a predetermined storage area of the additional information. The additional information has, at a predetermined bit position thereof, a reserved storage area that is a reserve area for future expansion. The additional information encode section **103** stores the received character data in the reserve area. The additional information encode section **103** modulates the additional information in which the character data has already stored with a second modulation scheme which is different from the first modulation scheme. The additional information encode section **103** then transmits the modulated additional information to the multi-carrier modulation section **104.**

The second carrier modulation scheme is typified by DBPSK. An intersymbol distance of the second carrier modulation scheme is longer than that of the first carrier modulation scheme, because a number of bits represented using each symbol of the second carrier modulation scheme is smaller than that of the first carrier modulation scheme. Therefore, the second carrier modulation scheme reduces, in comparison with the first carrier modulation scheme, an error caused by noise. Due to at least the difference between the first and the second carrier modulation schemes, the additional information including the character data and transmission parameters being necessary to be recognized by the receiver during data reproduction are noise immunity better than the abovementioned data stream.

Since there is the difference between the first and the second carrier modulation schemes, the receiver can correctly demodulate the additional information in most cases, even if the receiver cannot demodulate the data stream due to the high BER of the data stream.

The multi-carrier modulation section **104** performs a multi-carrier modulation such as OFDM on the received data stream and the received additional information in order to transmit the data stream and the additional information as a radio wave. After the modulation, the multi-carrier modulation section **104** performs frequency conversion such as an inverse fast Fourier transform (IFFT) on the modulated data stream and the additional information to generate transmission signals. The generated transmission signals are then transmitted from an antenna (not shown) of the transmitter and received by the receiver described below.

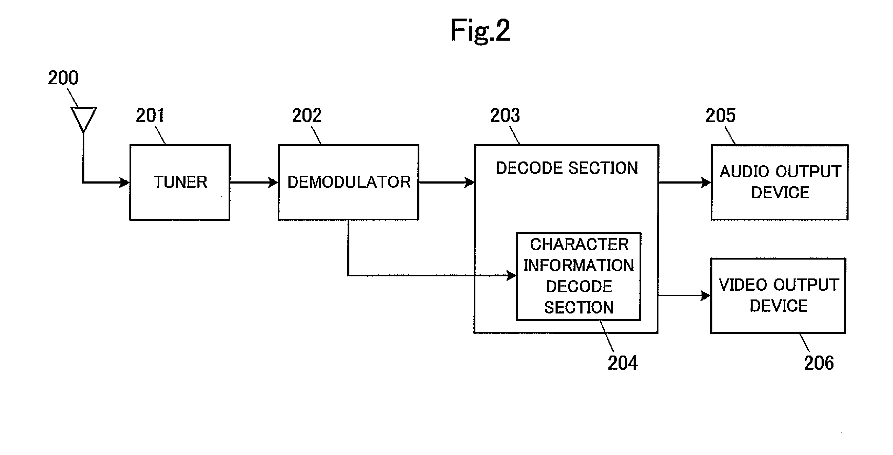

Fig. **2** is a block diagram showing the entire configuration of the receiver according to the first embodiment of the present invention. In Fig. **2****,** the receiver comprises a tuner **201** connected to an antenna **200,** a demodulation section **202,** a decode section **203** including a character information decode section **204,** an audio output device **205,** and a video output device **206.**

The antenna **200** receives the transmission signals from the transmitter shown in Fig. **1****.** The tuner **201** extracts, for example, a signal included in a frequency band assigned to a channel specified by a user from the transmission signals received by the antenna **200,** to output the extracted signal to the demodulation section **202.** The demodulation section **202** demodulates the signal output from the tuner **201** to digital data. The decode section **203** decodes the digital data output from the demodulation section **202** to reproduce audio data, image data and character data, which are included in the data stream, in accordance with the additional information included in a the demodulation result of the demodulation section **202.** The audio output device **205** outputs a sound based on the reproduced audio data. The video output device **206** outputs the reproduced image data and the reproduced character data.

The additional information is also provided to the character information decode section **204.** The character information decode section **204** decode sections the character data included in the reserve area of the additional information if the demodulation section **202** does not correctly decode the character data due to bad receiving environment of the receiver. The video output device **206** outputs a character based on the character data decoded by the character information decode section **204.**

The decode section **203** calculates an error rate of the data stream in accordance with error packet information, which is separately output to the decode section **203** from the demodulation section **202.** The decode section **203** compares the calculated error rate with a predetermined threshold value to determine whether or not the receiving environment is good, that is, whether or not the data stream can be correctly decoded. If the decode section **203** determines that the data stream cannot be correctly decoded, the decode section **203** stops decoding the data stream and instructs the character information decode section **204** to decode section the character data. In response to the instruction, the character information decode section **204** decodes the character data included in the reserve area of the additional information. The decode section **203** may determine whether or not the receiving environment is good in accordance with an electric field of the received signal instead of the error rate.

As described above, the transmitter inserts the character data into the reserve area of the additional information. The receiver reproduces and outputs the character data inserted in the additional information modulated with the second modulation scheme providing relatively high noise immunity even if the receiving environment of the receiver is poor. Since the receiver reproduces and outputs the character data if the receiver stops outputting an image and/or a sound, the transmitter and the receiver can be used with reduced frustration for the user.

In the above description, the character data is stored in the reserve area of the additional information. However, it is not restrictive, that the character data stream output from the encode section **100** may be alternatively stored in the reserve area. The amount of data, which can be stored in the reserve area, is relatively small. The character data as such or the character data stream may be therefore provided to the additional information encode section **103** after a data compression section (not shown) compresses the character data or the character data stream.

### (Second Embodiment)

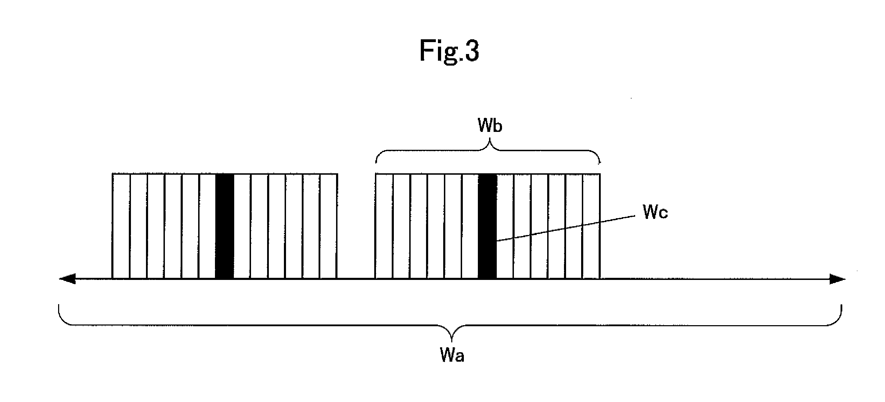

The second embodiment of the present invention will be described. According to the second embodiment, each of the transmitter and the receiver is designed for so-called one-segment broadcasting being a type of Japanese terrestrial digital broadcasting. As shown in Fig. **3****,** in the Japanese terrestrial digital broadcasting, a frequency bandwidth **Wb** of 6 MHz for each channel of a television is divided into thirteen segments. The one-segment broadcasting uses a center segment **Wc** of the thirteen segments as shown in Fig. **3**, and is mainly designed for reproduction of data by a mobile receiving terminal such as a cellular phone and an in-vehicle TV receiver. The above Japanese terrestrial digital broadcasting is described in [Terrestrial digital broadcasting transmission system ARID STD-B31 Version 1.5] (established on May 31st, 1999, and revised on July 29th, 2003, Association of Radio Industries and Businesses). Fig. **3** also shows a frequency bandwidth **Wa** of a signal received by an antenna **411** described below.

In the one-segment broadcasting, each of video data, audio data, and the like converted to a transport stream (hereinafter referred to as a TS) are subjected to multi-carrier modulation in order to generate an OFDM signal. The generated OFDM signal is broadcasted as the transmission signal, and may include character data.

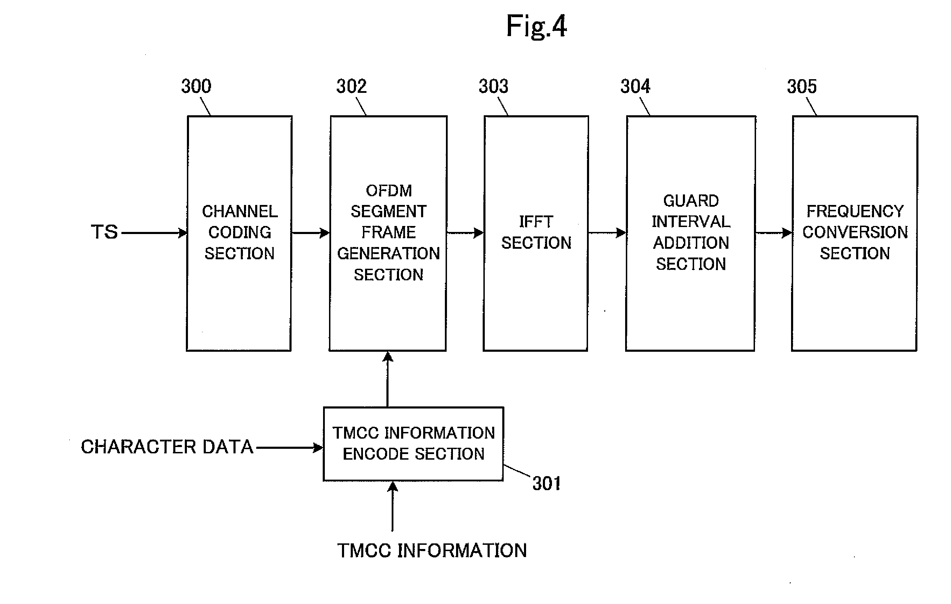

Fig. **4** is a block diagram showing the entire configuration of a transmitter according to the second embodiment. In Fig. **4****,** the transmitter comprises a channel coding section **300,** a TMCC information encode section **301,** an OFDM segment frame generation section **302,** an IFFT section **303,** a guard interval addition section **304,** and a frequency conversion section **305.**

The channel coding section **300** executes byte-to-bit conversion, energy dispersal, delay adjustment, byte interleaving, bit-to-byte conversion, convolution encoding, carrier modulation, synthesis of hierarchical streams, time interleaving, and frequency interleaving on the received TS to generate an encoded TS. The channel coding section **300** then outputs the encoded TS to the OFDM segment frame generation section **302.** The channel coding section **300** executes the carrier modulation according to the first multi-carrier modulation scheme. The other processing executed by the channel coding section **300** is known, and description thereof is omitted.

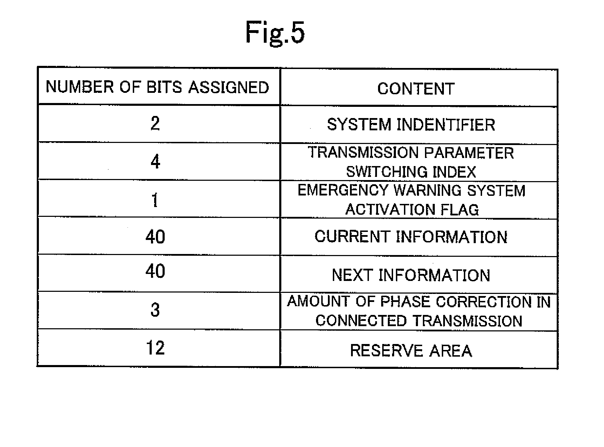

The TMCC information encode section **301** receives character data similar to that in the first embodiment and Transmission and Multiplexing Configuration Control (TMCC) information corresponding to the additional information in the first embodiment. The TMCC information includes information indicative of the first carrier modulation scheme, information indicative of a convolution encoding rate, and information indicative of whether or not terrestrial digital broadcasting is used. As shown in Fig. **5****,** the TMCC information has 102 bits and 12bits of the TMCC information are reserved for future expansion. Such a reserve area of the TMCC information stores the character data received by the TMCC information encode section **301**.

If the TMCC information encode section **301** cannot receive the TMCC information, the receiver cannot demodulate the received signal. In the TMCC information, the character data is therefore stored, and such a TMCC information is modulated by the TMCC information encode section **301** according to DBPSK, which is a typical example of the second carrier modulation scheme in order to increase noise immunity on a transmission path. The modulated TMCC information is then output to the OFDM segment frame generation section **302.**

The OFDM segment frame generation section **302** inserts a pilot signal necessary for reception of data included in one segment into the received encoded TS and then inserts the received TMCC information into a predetermined area of the encoded TS in order to generate an OFDM segment frame. If the OFDM segment frame generation section **302** inserts TMCC information into the reserve area once every 200 milliseconds, character data can be transmitted at a maximum rate of 60 bps due to the use of the reserve area of the TMCC information.

If the character data cannot be inserted into the reserve areas due to the transmission rate of more than 60 bps, the TMCC information encode section **301** may store, in the reserve areas, the character data compressed by a predetermined data compression method. If the transmission rate of the character data is equal to or less than 60 bps, the TMCC information encode section **301** may store, in the reserve area, other character data being represented by a character code scheme other than that of the character data to be originally included in the TS and indicating the same meaning as the character data to be originally included therein.

The IFFT section **303** performs an inverse fast Fourier transform (IFFT) on the OFDM segment frame and generate a signal (hereinafter referred to as a multi-carrier modulation signal), which is obtained by modulating each of carriers. The guard interval addition section **304** adds guard intervals to the multi-carrier modulation signal. The frequency conversion section **305** up-converts the multi-carrier modulation signal to which the guard intervals are added. The up-converted multi-carrier modulation signal is transmitted from an antenna (not shown). Such a transmitted signal is received by a receiver, which is described below.

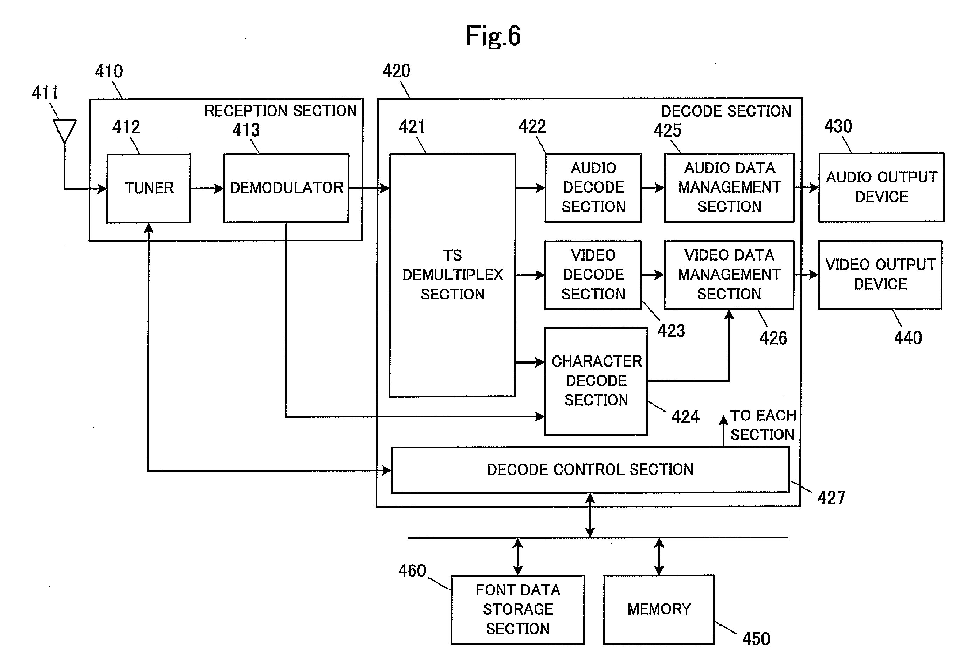

Fig. **6** is a block diagram showing the entire configuration of the receiver according to the second embodiment of the present invention. The receiver comprises a reception section **410,** a decode section **420,** an audio output device **430** for outputting a sound, a video output device **440** for outputting an image and a character, a memory **450** for storing data during processing on the data, and a font data storage section **460** for storing font data necessary to reproduce characters.

The reception section **410** is connected to an antenna **411** for receiving a transmission signal included in the frequency bandwidth **Wa** (refer to Fig. **3**). The reception section **410** includes a tuner **412** and a demodulation section **413.** The tuner **412** extracts a signal included in a predetermined frequency bandwidth (e.g., the frequency bandwidth **Wb** shown in Fig. **3**) from the signal received by the antenna **411.** The demodulation section **413** extracts TMCC information necessary to demodulate a transport stream (TS) from a signal output from the tuner **412** to demodulate the TMCC information. The demodulation section **413** then demodulates the TS in accordance with the TMCC information, and outputs the demodulated TS to the decoding section **420.**

The decoding section **420** decodes the received TS to reproduce video data and audio data. For the reproduction, the decoding section **420** includes a TS demultiplex section **421,** an audio decode section **422,** a video decode section **423,** a character decode section **424,** an audio data management section **425,** a video data management section **426,** and a decode control section **427.**

The TS demultiplex section **421** demultiplexes video data and audio data multiplexed to the TS. If character data is multiplexed in the TS, the TS demultiplex section **421** demultiplex the character data from the TS. The TS demultiplex section **421** outputs the demultiplexed audio data to the audio decode section **422**, the demultiplexed video data to the video decode section **423,** and the separated character data to the character decode section **424**.

The audio decode section **422** expands the compressed audio data to output the expanded audio data to the audio data management section **425.** The video decode section **423** expands the compressed video data to output a resultant video plain to the video data management section **426.** The character decode section **424** uses the received character data and font data stored in the font data storage section **460** to generate a character plain. The character decode section **424** then outputs the generated character plain to the video data management section **426.**

If the video data management section **426** receives plural plains (typically, an video plain and a character plain), the video data management section **426** superimposes these plains and outputs the superimposed plains to the video output device **440.** The audio data management section **425** outputs the received audio data to the audio output device **430.** Through the above processing, the video output device **440** outputs a video, and the audio output device **430** outputs a sound. Note that the decode control section **427** manages a series of the processing.

Next, the reproduction of the character data stored in the reserve area will be described, which is a feature of the present embodiment. The demodulation section **413** further transmits the character data stored in the reserve area of the TMCC information to the character decode section **424.**

The character decode section **424** determines whether or not to decode the character data included in the TS, and whether or not to decode the character data included in the TMCC information, in accordance with an instruction from the decode control section **427** or the TS demultiplex section **421.** The decoding section **420** determines which character data is decoded in a similar way to the decoding section **203** in the first embodiment, and description thereof is omitted. If the decoding section **420** determines that the current receiving environment is bad, each of the audio decode section **422** and the video decode section **423** stops processing, and the decoding section **420** instructs the character decode section **424** to reproduce the character data stored in the reserve area. In response to the instruction, the character decode section **424** uses the character data received from the demodulation section **413** and the font data stored in the font data storage section **460** to generate a character plain. The character decode section **424** outputs the generated character plain to the video data management section **426.** The video data management section **426** then outputs the received character plain to the video output device **440.** After that, the video output device **440** outputs a character. The decode control section **427** manages the abovementioned processing.

In the present embodiment, the reserve area of the TMCC information is used in the Japanese terrestrial digital broadcasting to obtain similar effects to the first embodiment.

As described above, the demodulation section **413** outputs the character data to the character decode section **424.** The demodulation section **413** may multiplex the character data stored in the reserve area of the TMCC information into a TS to output the TS to the TS demultiplex section **421,** which may then separates the character data from the TS and outputs the character data to the character decode section **424.** Alternatively, the demodulation section **413** may output the character data stored in the reserve area of the TMCC information to the TS demultiplex section **421** without multiplexing, and the TS demultiplex section **421** may separate the character data stored in the reserve area of the TMCC information and output the character data to the character decode section **424.**

### Industrial Applicability

The receiver according to the present invention is capable of receiving a signal of digital broadcasting and suitable for a mobile phone and an in-vehicle television receiver, which need to be used with reduced frustration for the user.

## Claims

1. A transmitter comprising:
a channel coding section operable to encode input data stream according to a first modulation scheme;
an additional information encode section operable to receive character data and additional information having a reserve area and including a transmission parameter relative to the first modulation scheme, to store the received character data in the reserve area of the additional information, and to encode the additional information in which the character data is stored according to a second modulation scheme using a smaller number of bits, which can be represented with a single symbol, than that of bits of a single symbol to be used in the first modulation scheme; and
a multi-carrier modulation section operable to modulate multi-carriers with the data stream encoded according to the first modulation scheme and the additional information encoded according to the second modulation scheme.

2. A receiver comprising:
an antenna section operable to receive transmission signals which is multi-carriers modulated with a data stream and additional information, the data stream being encoded according to a first modulation scheme, and the additional information being encoded according to a second modulation scheme using a smaller number of bits, which can be represented with a single symbol, than that of bits of a single symbol to be used in the first modulation scheme;
a character information decoding section operable to decode the character data stored in the additional information included in the transmission signals received by said antenna section; and
an image output section operable to output a character represented by the character data decoded in said character information decoding section.

3. The receiver according to claim 2, wherein
said character information decode section decodes the character data stored in the additional information if a receiving environment thereof is not good.

4. The receiver according to claim 3, further comprising:
a decode section operable to determine whether or not the receiving environment is good, to decode image data, audio data or character data multiplexed into the data stream if the receiving environment is good, and to provide an instruction to said character information decode section if the receiving environment is not good, wherein
said character information decode section decodes the character data included in the additional information in response to the instruction provided from said decode section.
